# EUROPÄISCHE PATENTSCHRIFT

(11) **EP 0 614 790 B1**
(45) Veröffentlichungstag und Bekanntmachung des Hinweises auf die Patenterteilung: **12.06.1996**
(21) Anmeldenummer: 94102932.4
(22) Anmeldetag: 25.02.1994
(51) Int. Cl.: B60R 22/46, B60R 22/28, F16F 7/12

(54) **Gurtstraffer für Sicherheitsgurtsysteme in Fahrzeugen**
Pretensioner for seat belt systems in vehicles
Prétendeur pour systèmes de ceinture de sécurité dans les véhicules

(30) Priorität: 06.03.1993 DE 4307062
(43) Veröffentlichungstag der Anmeldung: 14.09.1994
(73) Patentinhaber: TRW Occupant Restraint Systems GmbH, D-73553 Alfdorf (DE)
(72) Erfinder: Föhl, Artur, D-73614 Schorndorf (DE)
(74) Vertreter: Degwert, Hartmut, Dipl.-Phys.

(56) Entgegenhaltungen:
- DE-A- 4 109 776
- DE-A- 4 224 324
- DE-U- 8 617 847
- FR-A- 1 458 873

## Beschreibung

Die Erfindung betrifft einen Gurtstraffer für Fahrzeugsicherheitsgurtsysteme, mit einem pyrotechnischen Gasgenerator und einer in einem Gehäuseblock befestigten Kolben/Zylindereinheit, deren Kolben an einem ersten Ende des Zylinders angeordnet sowie mit einem Zugseil verbunden ist und durch den vom Gasgenerator erzeugten Gasdruck zum zweiten, eine Verengung aufweisenden Ende des Zylinders beschleunigt wird, wobei die Kolben/Zylindereinheit mit dem Gehäuseblock und dem in diesen eingesetzten Gasgenerator eine schwenkbar gelagerte fahrzeugsensitive Trägheitsmasse bildet.

Ein derartiger Gurtstraffer ist aus der DE-OS 41 09 776 (EP-A-505 823) bekannt. Bei diesem Gurtstraffer mit pyrotechnischen Linearantrieb ist ein Endbereich vor dem zweiten, vom Gasgenerator entfernt gelegenen Zylinderende kegelförmig in Richtung auf das Zylinderende verjüngt. Auf diese Weise wirkt dieser Endbereich des Zylinders als Kolbenfangsicherung. Beispielsweise im Falle eines nicht benutzten Sicherheitsgurtes oder eines Seilbruchs wird der infolge des von dem Gasgenerator erzeugten Gasdrucks beschleunigte Kolben abgebremst, um zu verhindern, daß er den Zylinder verläßt. Der Zylinder und der Kolben bestehen in der Regel aus gepreßtem Aluminium.

Der Kolben/Zylinder-Linearantrieb umfaßt außer dem Kolben, dem Zylinder und dem Gasgenerator einen Gehäuseblock, worin der Zylinder befestigt und der Gasgenerator aufgenommen ist. Die so gebildete Baugruppe wird bei dem gattungsgemäßen Gurtstraffer als fahrzeugsensitive Trägheitsmasse genutzt. Durch das Entfallen einer gesonderten Trägheitsmasse können Raumbedarf sowie Aufwand an Material und Montage gering gehalten werden.

Zur Steigerung der Schutzwirkung von Sicherheitsgurtsystemen werden neuerdings pyrotechnische Linearantriebe für die Gurtstraffung mit höheren pyrotechnischen Leistungen eingesetzt. Durch die leistungsstarken Linearantriebe werden auch die auf den Zylinder wirkenden Kräfte beim Abbremsen des Kolbens erhöht. Insbesondere bei Auslösung des Gasgenerators bei einem nicht benutzten Sicherheitsgurt würde die Kolbenenergie nunmehr ausreichen, den als Kolbenfangsicherung dienenden kegelförmig verjüngten Endbereich des Zylinders aufzuweiten, so daß der Kolben aus dem Zylinder austreten könnte.

Der Erfindung liegt die Aufgabe zugrunde, einen Gurtstraffer mit den eingangs erwähnten Merkmalen so zu verbessern, daß eine sichere Abbremsung des Kolbens auch bei erhöhter Leistung des Gasgenerators gewährleistet ist, ohne jedoch die fahrzeugsensitive Auslösung des Gasgenerators zu beeinträchtigen.

Diese Aufgabe wird erfindungsgemäß in Verbindung mit den Oberbegriffsmerkmalen des Patentanspruchs 1 dadurch gelöst, daß an dem Kolben ein Verformungsglied angeordnet ist, das bei Beschleunigung des Kolbens in Richtung auf das zweite Ende des Zylinders von dem Kolben mitgenommen und beim Auftreffen auf die die Verengung bildenden Wandungsteile des Zylinders plastisch verformt wird.

Der Erfindung liegt die Erkenntnis zugrunde, daß der Schwerpunktsabstand des Kolben/Zylinder-Linearantriebs zur Schwenkachse einen wichtigen Parameter für die Ansprechempfindlichkeit zur Auslösung der Zündung des Gasgenerators bildet. Bei der Ausbildung des erfindungsgemäßen Gurtstraffers wurde daher also auf den sich ergebenden Schwerpunkt beim Kolben/Zylinder-Linearantrieb besonders geachtet. Durch Anordnen eines Verformungsglieds an dem Kolben läßt sich eine einfache und den Anforderungen entsprechend einstellbare Bremswirkung im Endbereich des Zylinders erzielen. Die Anordnung des Verformungsgliedes führt zu keiner nachteiligen Beeinflussung des Schwerpunkts, da seine Masse nahe dem ursprünglichen Schwerpunkt des Kolben/Zylinder-Linearantriebs angeordnet ist.

Somit können die gattungsgemäßen bekannten Konstruktionen von Kolben/Zylinder-Linearantrieben mit einem Verformungsglied versehen werden, ohne daß die vorbestimmte Ansprechempfindlichkeit des Kolben/Zylinder-Linearantriebs wesentlich beeinträchtigt wird. Es kann sogar die Ansprechempfindlichkeit durch die Masse und die Ausbildung des Verformungsglieds in einem gewissen Umfang eingestellt werden.

Die Bremswirkung kann durch die Form des Verformungsglieds und die des Kolbens optimiert werden. Eine vorteilhafte Ausführungsform besteht darin, daß der Kolben einen axialen Ansatz mit verminderter Querschnittsfläche auf der dem zweiten Ende des Zylinders zugewandten Seite aufweist und das hülsenförmig ausgebildete Verformungsglied auf den Ansatz des Kolbens aufgeschoben ist. Zweckmäßig ist es auch, in dem Verformungsglied einen Verformungsraum zu bilden, damit eine gerichtete Verformung des Verformungsglieds beim Abbremsen des Kolbens stattfinden kann. Dafür ist in der Außenmantelfläche und/oder in der Innenmantelflache des hülsenförmigen Verformungsglieds eine Profilierung vorgesehen, die insbesondere durch in Richtung der Axialerstreckung verlaufende Rippen und/oder Nuten gebildet wird.

Die Bremswirkung auf den Kolben kann ferner durch geeignete Werkstoffwahl optimiert werden. Die Schmelztemperatur des Werkstoffs des Verformungsglieds sollte über der Selbstzündungstemperatur des pyrotechnischen Gasgenerators liegen. Dies kann beispielsweise durch einen metallischen weichlotähnlichen Werkstoff wie einer Zinnlegierung erreicht werden. Die Bremswirkung durch das Verformungsglied auf den Kolben bleibt dann auch bei einem Fahrzeugbrand erhalten, wenn infolge der Hitzeeinwirkung der Gasgenerator gezündet wird.

Weitere Merkmale und Vorteile der Erfindung ergeben sich aus der folgenden Beschreibung und aus der Zeichnung, auf die Bezug genommen wird. Es zeigen:
Fig. 1 eine Teilquerschnittsansicht eines pyrotechnischen Kolben/Zylinder-Linearantriebs gemäß der Erfindung;
Fig. 2 eine perspektivische Darstellung eines Kolbens von Fig. 1;
Fig. 3a eine perspektivische Darstellung des Verformungsglieds von Fig. 1;
Fig. 3b einen Querschnitt des Verformungsglieds von Fig. 3a;
Fig. 4a und 5a jeweils eine perspektivische Darstellung einer weiteren Ausführungsform eines Verformungsglieds gemäß der Erfindung; und
Fig. 4b und 5b jeweils eine Querschnittsdarstellung des Verformungsglieds von Fig. 4a bzw. 5a.

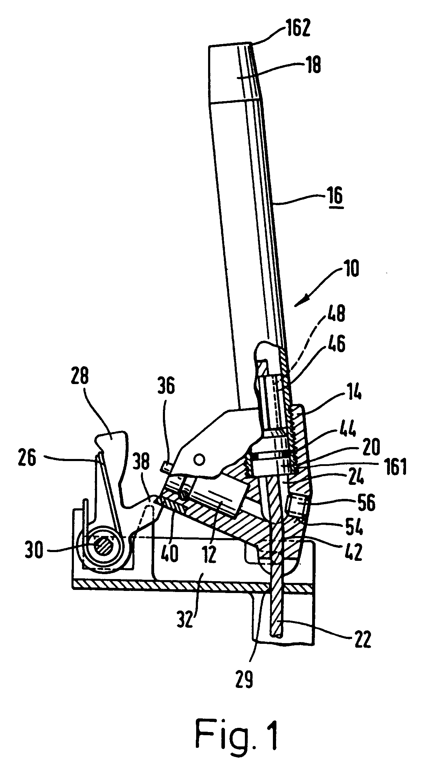

In Fig. 1 ist eine Teilquerschnittsansicht eines Kolben/Zylinder-Linearantriebs 10 eines Gurtstraffers für Fahrzeugsicherheitsgurtsysteme dargestellt. Der Kolben-Zylinder-Linearantrieb 10 besteht aus einem Gasgenerator 12, einem Gehäuseblock 14, in dem der Gasgenerator 12 in einer entsprechenden Ausnehmung angeordnet ist, einem Zylinder 16 mit einem sich verengenden Endbereich 18 und einem in dem Zylinder 16 verschiebbar gelagerten Kolben 20, an dem ein Zugseil 22 angeschlossen ist.

Der Zylinder 16 ist an seinem ersten Ende mit einem Gewinde versehen und in einer entsprechenden Ausnehmung mit Gewinde in den Gehäuseblock 14 eingeschraubt. Der Kolben 20 ist in Ruhestellung bei dem ersten Ende 161 des Zylinders 16 angeordnet. An den Kolben 20 schließt sich eine Druckkammer 24 an, die mit dem Aufnahmeraum des mechanisch zündbaren Gasgenerators 12 verbunden ist. Selbstverständlich können auch andere Zündvorrichtungen verwendet werden, wie z. B. eine elektrische Zündvorrichtung. Für die mechanische Zündung des Gasgenerators 12 ist jedoch ein durch eine Feder oder Schenkelfeder 26 vorgespannter Schlaghebel 28 vorgesehen, der durch Abstützung am Gehäuseblock 14 in seiner vorgespannten Stellung gehalten wird. Der Schlaghebel 28 ist über einen Stift 30 schwenkbar an dem Stützgehäuse 32 gelagert. Der Gehäuseblock 14 ist ebenfalls über einen hier nicht dargestellten Lagerstift schwenkbar gelagert. Der Gasgenerator 12 ist an seinem aus dem Gehäuseblock 14 herausragenden Ende mit einem Schlagzünder mit Schlagstift 36 versehen. Das äußere Ende des Schlagstifts 36 ragt aus der Bodenfläche des Gasgenerators 12 heraus.

Der Schlaghebel 28 wird durch die Feder 26 im Sinne einer Bewegung des Schlaghebels 28 gegen den Schlagstift 36 belastet. Gemäß Fig. 1 ist der Schlaghebel 28 in seiner Ruhestellung dargestellt. Ein an den Schlaghebel 28 angeformter, zum Gehäuseblock 14 abstehender Ansatz 38 mit einer stufenförmigen Fläche liegt an einer Haltefläche 40 am benachbarten Ende des Gehäuseblocks 14 an. Die Feder 26 belastet somit nicht nur den Schlaghebel 28, sondern auch den Gehäuseblock 14, so daß dieser in einer stabilen Ruhestellung gehalten wird.

Durch die Druckkammer 24 und eine dem Querschnitt des Zugseils 22 im wesentlichen angepaßte Bohrung 29 ist das Zugseil 22 hindurchgeführt. Das Zugseil 22 kann zur Gurtstraffung in bekannter Weise an einem hier nicht dargestellten Gurtaufroller oder einem ebenfalls hier nicht dargestellten Gurtschloß angreifen.

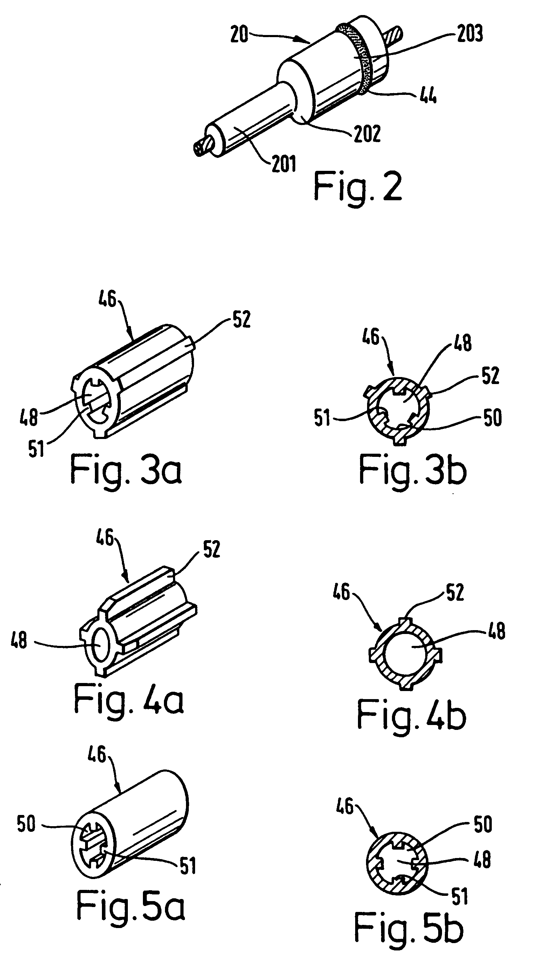

Der Kolben 20 ist fest mit dem Zugseil 22 verpreßt und weist eine Dichtung 44 in einer Umfangnut auf (Fig. 1, Fig. 2), damit der für den Straffervorgang vom Gasgenerator 12 erzeugte Gasdruck nahezu verlustfrei auf den Kolben 20 einwirken kann. Der Kolben 20 hat an seinem vorderen Ende einen hülsenförmigen Ansatz 201 (Fig. 1), der über einen konischen Bereich 202 mit dem übrigen Kolbenteil 203 verbunden ist. Der Zylinder 16 und der Kolben 20 weisen jeweils über ihre Länge einen kreisförmigen Querschnitt auf.

Auf dem Ansatz 201 ist ein Verformungsglied 46 aufgeschoben, das dafür eine zylindrische, axial hindurchgehende und an den Ansatz 201 des Kolbens 20 angepaßte Ausnehmung 48 aufweist. Das hülsenförmige Verformungsglied 46 ist im einzelnen anhand der Figuren 3a und 3b dargestellt. In die Innenmantelfläche des Verformungsglieds 46 sind Nuten 50 eingearbeitet, zwischen denen axial verlaufende Rippen 51 verbleiben. Die Außenmantelfläche des Verformungsglieds 46 ist mit Rippen 52 versehen, die sich wie die Rippen 51 parallel zur Mittelachse des Zylinders 16 erstrecken. Vor dem zweiten freien Ende 162 des Zylinders 16 ist der Zylinder 16 kegelstumpfförmig ausgebildet, so daß sich die Querschnittsfläche des Hohlraums des Zylinders 16 in diesem Endbereich 18 in Richtung auf das zweite Ende 162 verkleinert.

Der Kolben-Zylinder-Linearantrieb 10 wird im Fahrzeug in solcher Orientierung eingebaut, daß der Gehäuseblock 14 durch bei einer Fahrzeugverzögerung auftretende Trägheitskräfte bestrebt ist, aus der in Fig. 1 gezeigten Ruhestellung in Richtung einer Auslösestellung verschwenkt zu werden. Sobald sich die Endkante des Gehäuseblocks 14 über den Ansatz 38 hinausbewegt hat, ist der Schlaghebel 28 freigegeben. Er wird nun durch die Druckfeder 26 beschleunigt, so daß der Schlaghebel 28 gegen das freie Ende des Schlagstifts 36 getrieben wird. Durch die Zündung des Gasgenerators 12 werden Gase freigesetzt, die durch die Druckkammer 24 im Gehäuseblock 14 in das untere Ende des Zylinders 12 einströmen und den Kolben 20 im Zylinder 16 mit dem Verformungsglied 46 hochtreiben, wobei das Zugseil 22 mitgenommen wird.

Wenn der Kolben 20 den Endbereich 18 des Zylinders 16 erreicht, trifft der vordere Bereich des Verformungsglieds 46 an der sich konisch verengenden Innenfläche des Zylinders 16 auf, und das Verformungsglied 46 wird gegen den Widerstand der Zylinderwandung durch den nachdrückenden Kolben 20 plastisch verformt. Die Verformung läuft dabei gerichtet ab, da der Werkstoff in die Nuten 50 bzw. die Freiräume zwischen den Rippen 51, 52 fließen kann. Das Verformungsglied 46 wird dabei derart plastisch verformt, daß es der Gegenkontur des Kolbens 20 und dem Endbereichs 18 in dem Zylinder 16 angepaßt wird.

Das Verformungsglied 46 besteht aus einem metallischen weichlotähnlichen Werkstoff, wie einer Zinnlegierung. Der Schmelzpunkt des Werkstoffs liegt über der Selbstzündungstemperatur des Gasgenerators 12, so daß die Bremswirkung des Verformungsglieds 46 auf den Kolben 20 auch bei Hitzeeinwirkung und durch diese ausgelöste Zündung des Gasgenerators, wie beispielsweise im Brandfalle, erhalten bleibt.

In eine Bohrung 54 des Gehäuseblocks 14 ist ein Stopfen 56 aus einem Werkstoff eingesetzt, dessen Schmelztemperatur oberhalb des Betriebstemperaturbereichs des Gasgenerators 12 liegt und höchstens gleich der Selbstzündungstemperatur des Gasgenerators 12 ist. Der Stopfen 56 erweicht bei Hitzeeinwirkung, beispielsweise in einem Brandfalle, und gibt bei Zündung des Gasgenerators 12 die Bohrung 54 frei, so daß keine gefährlich hohen Gasdrücke in der Druckkammer 24 auftreten können.

Weitere Ausführungsformen des Verformungsglieds 46 zeigen die Figuren 4a und 5a. Entsprechende Querschnitte dazu sind in den Figuren 4b und 5b dargestellt. Das Verformungsglied 46 gemäß den Figuren 4a und 4b entspricht im wesentlichen dem Verformungsglied 46 der Fig. 1 und 3a und 3b. Es unterscheidet sich jedoch dadurch, daß es an der Innenfläche keine Rippen aufweist. Desweiteren sind mehrere Rippen an der Außenmantelfläche des Verformungsglieds 46 angeordnet. Die Rippen 52 sind in ihrem vorderen Bereich abgeschrägt. Dies ist für das Auftreffen des Verformungsglieds 46 auf den kegelstumpfförmigen Endbereich 18 des Zylinders 16 günstig.

Die Ausführungsform gemäß den Figuren 5a und 5b unterscheidet sich von der ersten Ausführungsform gemäß den Figuren 1 und 3a und 3b dadurch, daß das Verformungsglied 46 keine Rippen an der Außenmantelfläche aufweist und eine zusätzliche Rippe 51 in der Innenflache des Verformungsglieds 46 ausgearbeitet ist.

Die Zahl der Nuten 50 bzw. Rippen 51, 52 sowie die Größe des Verformungsglieds 46 können entsprechend der Stärke des Gasgenerators 12 und in Abhängigkeit des gewünschten Schwerpunktabstands von der Schwenkachse variiert werden. Durch diese Profilierung kann die plastische Verformung des Verformungsglieds 46 beeinflußt und somit die Bremswirkung beim Eintreten des Kolbens 20 in den kegelstumpfförmigen Endbereich 18 des Zylinders 16 eingestellt werden, so daß eine sichere Abbremsung des Kolbens 20 in jeder Situation gewährleistet wird.

Wie aus den beschriebenen Ausführungsformen ersichtlich ist, kann die Bremswirkung durch das Verformungsglied 46 anwendungsgerecht durch die Form und den Werkstoff optimal eingestellt werden.

## Patentansprüche

1. Gurtstraffer für Fahrzeugsicherheitsgurtsysteme, mit einem pyrotechnischen Gasgenerator (12) und einer in einem Gehäuseblock (14) befestigten Kolben/Zylindereinheit (16, 20), deren Kolben (20) an einem ersten Ende (161) des Zylinders (16) angeordnet sowie mit einem Zugseil (22) verbunden ist und durch den vom Gasgenerator (12) erzeugten Gasdruck zum zweiten, eine Verengung aufweisenden Ende (162) des Zylinders (16) beschleunigt wird, wobei die Kolben/Zylindereinheit (16, 20) mit dem Gehäuseblock (14) und dem in diesen eingesetzten Gasgenerator (12) eine schwenkbar gelagerte fahrzeugsensitive Trägheitsmasse bildet, dadurch gekennzeichnet, daß an dem Kolben (20) ein Verformungsglied (46) angeordnet ist, das bei Beschleunigung des Kolbens (20) in Richtung auf das zweite Ende (162) des Zylinders (16) von dem Kolben (20) mitgenommen und beim Auftreffen auf die die Verengung bildenden Wandungsteile des Zylinders (16) plastisch verformt wird.

2. Gurtstraffer nach Anspruch 1, dadurch gekennzeichnet, daß der Kolben (20) einen axialen Ansatz (201) mit verminderter Querschnittsfläche auf der dem zweiten Ende des Zylinders (16) zugewandten Seite aufweist und das hülsenförmig ausgebildete Verformungsglied (46) auf den Ansatz (201) des Kolbens (20) aufgeschoben ist.

3. Gurtstraffer nach Anspruch 1 oder 2, dadurch gekennzeichnet, daß die Außenmantelfläche des Verformungsglieds (46) profiliert ausgebildet ist.

4. Gurtstraffer nach Anspruch 2 oder 3, dadurch gekennzeichnet, daß die Innenmantelfläche des hülsenförmigen Verformungsglieds (46) profiliert ausgebildet ist.

5. Gurtstraffer nach Anspruch 3 oder 4, dadurch gekennzeichnet, daß die Profilierung durch im wesentlichen in Axialrichtung des Zylinders (16) verlaufende Rippen (52) gebildet ist.

6. Gurtstraffer nach einem der Ansprüche 1 bis 5, dadurch gekennzeichnet, daß die Umhüllende des Verformungsglieds (46) im Querschnitt der Innenmantelfläche des Zylinders (16) angepaßt ist.

7. Gurtstraffer nach einem der vorangehenden Ansprüche, dadurch gekennzeichnet, daß die Verengung durch einen kegelstumpfförmigen Endbereich (18) des Zylinders (16) gebildet ist und das Verformungsglied (46) auf seiner zu dem zweiten Ende (162) des Zylinders (16) gerichteten Seite mindestens bereichsweise in Richtung auf das zweite Ende (162) des Zylinders (16) angeschrägt ist.

8. Gurtstraffer nach einem der vorangehenden Ansprüche, dadurch gekennzeichnet, daß die Schmelztemperatur des Werkstoffs des Verformungsglieds (46) über der Selbstzündungstemperatur des pyrotechnischen Gasgenerators (12) liegt.

9. Gurtstraffer nach Anspruch 8, dadurch gekennzeichnet, daß das Verformungsglied (46) aus einem metallischen weichlotähnlichen Werkstoff besteht.

10. Gurtstraffer nach Anspruch 9, dadurch gekennzeichnet, daß das Verformungsglied (46) aus einer Zinnlegierung besteht.

## Claims

1. A belt pretensioner for vehicle safety belt systems, comprising a pyrotechnic gas generator (12) and a piston and cylinder unit (16, 20) secured in a housing block (14), whose piston (20) is arranged at a first end (161) of the cylinder and connected to a cable (22) and by the gas pressure produced by the gas generator (12) is accelerated towards the second end (162) of the cylinder (16), which has a constriction, the piston and cylinder unit (16, 20) constituting, with the housing block (14) and the gas generator (12) arranged therein, a pivotally mounted vehicle-sensitive inertial mass, characterized in that a deformable member (46) is arranged on the piston (20) which on acceleration of the piston (20) towards the second end (162) of the cylinder (16) is entrained by the piston (20) and is plastically deformed on impinging on the wall parts of the cylinder (16) which constite the constriction.

2. The belt pretensioner as claimed in claim 1, characterized in that the piston (20) has an axial neck (201) with a reduced cross sectional area on the side facing the second end of the cylinder (16) and the sleeve-like deformable member (46) is slipped onto the neck (201) of the piston (20).

3. The belt pretensioner as claimed in claim 1 or in claim 2, characterized in that the outer enveloping surface of the deformable member (46) is profiled.

4. The belt pretensioner as claimed in claim 2 or in claim 3, characterized in that the inner enveloping surface of the sleeve-like deformable member (46) is profiled.

5. The belt pretensioner as claimed in claim 3 or in claim 4, characterized in that the profiled section is essentially constituted by ridges (52) extending in the axial direction of the cylinder (16).

6. The belt pretensioner as claimed in any one of the claims 1 through 5, characterized in that the enveloping surface of the deformable member (46) is in cross section adapted to the inner enveloping surface of the cylinder (16).

7. The belt pretensioner as claimed in any one of the preceding claims, characterized in that the constriction is constituted by a frustoconical terminal part (18) of the cylinder (16) and in that the deformable member (46) is, at least in part, chamfered on its end facing the second end (162) of the cylinder (16) towards the second end (162) of the cylinder (16).

8. The belt pretensioner as claimed in any one of the preceding claims, characterized in that the fusion temperature of the material of the deformable member (46) is above the self-ignition temperature of the pyrotechnic gas generator (12).

9. The belt pretensioner as claimed in claim 8, characterized in that the deformable member (46) consists of a metallic solder-like material.

10. The belt pretensioner as claimed in claim 9, characterized in that the deformable member (46) consists of a tin alloy.

## Revendications

1. Tendeur de ceinture pour systèmes de ceintures de sécurité de véhicules, avec un générateur pyrotechnique de gaz (12) et une unité piston-cylindre (16, 20) fixée dans un bloc de boîtier (14), unité dont le piston (20) est disposé sur une première extrémité (161) du cylindre (16), est relié à un câble de traction (22) et est propulsé par le gaz comprimé, produit par le générateur de gaz (12), vers la deuxième extrémité (162) du cylindre (16), extrémité qui présente un rétrécissement, l'unité piston-cylindre (16, 20) formant avec le bloc de boîtier (14) et le générateur de gaz (12), inséré dans celui-ci, une masse d'inertie montée de façon à pouvoir pivoter, sensible aux mouvements du véhicule, tendeur de ceinture caractérisé en ce que l'on dispose sur le piston (20) un organe de déformation (46), qui est entraîné lors de l'accélération du piston (20) en direction de la seconde extrémité (162) du cylindre (16) par le piston (20) et qui est déformé plastiquement lorsqu'il atteint les parties de la paroi du cylindre (16) qui forment le rétrécissement.

2. Tendeur de ceinture selon la revendication 1, caractérisé en ce que le piston (20) présente un appendice axial (201) avec une section transversale réduite sur le côté tourné vers la seconde extrémité du cylindre (16) et en ce que l'organe de déformation (46), constitué en forme de manchon, est enfilé sur l'appendice (201) du piston (20).

3. Tendeur de ceinture selon la revendication 1 ou 2, caractérisé en ce que la surface-enveloppe extérieure de l'organe de déformation (46) est constituée de manière profilée.

4. Tendeur de ceinture selon la revendication 2 ou 3, caractérisé en ce que la surface-enveloppe intérieure de l'organe de déformation (46) en forme de manchon est constituée de manière profilée.

5. Tendeur de ceinture selon les revendications 3 ou 4, caractérisé en ce que le profilage est constitué par des cannelures (52) qui s'étendent sensiblement dans le sens axial du cylindre (16).

6. Tendeur de ceinture elon l'une des revendications 1 à 5, caractérisé en en ce que l'enveloppement de l'organe de déformation (46) est adapté en section transversale à la surface-enveloppe intérieure du cylindre (16).

7. Tendeur de ceinture selon l'une des revendications précédentes, caractérisé en ce que le rétrécissement est formé par une zone terminale (18) du cylindre (16), qui a la forme d'un tronc de cône et l'organe de déformation (46) est chanfreiné sur son côté tourné vers la seconde extrémité (162) du cylindre (16) au moins localement en direction de la seconde entrée (162) du cylindre (16).

8. Tendeur de ceinture selon l'une des revendications précédentes, caractérisé en ce que la température de fusion de la matière de l'organe de déformation (46) se situe au-dessus de la température d'auto-allumage du générateur pyrotechnique de gaz (12).

9. Tendeur de ceinture selon la revendication 8, caractérisé en ce que l'organe de déformation (46) consiste en une matière métallique analogue à un métal d'apport de brasage tendre.

10. Tendeur de ceinture selon la revendication 9, caractérisé en ce que l'organe de déformation (46) consiste en un alliage à base d'étain.
